# EUROPEAN PATENT APPLICATION

(11) **EP 1 560 352 A1**
(43) Date of publication of application: **03.08.2005**
(21) Application number: 04771540.4
(22) Date of filing: 11.08.2004
(51) Int. Cl.: H04B 7/26, H04J 13/00

(54) **COMMUNICATION TERMINAL APPARATUS AND TRANSMISSION POWER CONTROL METHOD**

(30) Priority: 12.08.2003 JP 2003292670
(71) Applicant: MATSUSHITA ELECTRIC INDUSTRIAL CO., LTD., Kadoma-shi, Osaka 571-8501 (JP)
(72) Inventor: IOCHI, Hitoshi, Yokohama-shi, Kanagawa 235-0023 (JP); SUZUKI, Hidetoshi, Yokosuka-shi, Kanagawa 239-0841 (JP)
(74) Representative: Grünecker, Kinkeldey, Stockmair & Schwanhäusser Anwaltssozietät
(86) International application number: PCT/JP2004/011555
(87) International publication number: WO 2005/015781

(57) **Abstract**

A communication terminal apparatus is provided that is used in a CDMA radio communication system. In this apparatus, a resource allocation section (191) allocates first channel and second channel resources based on DPCCH transmission power and an offset value. A TFC Selection section (162) creates TFCs based on buffer amounts stored in buffers (161-1 through 161-N), and performs selection of usable TFCs (TFC Selection) based on first channel resources allocated by resource allocation section 191. A TFC decision section (163) decides on one TFC from among the usable TFCs based on DCH#1 through #N priority information. By this means, this apparatus can perform control so that the total transmission power of all channels does not exceed the maximum transmission power when there are uplink channels that are subject to TFC selection and uplink channels that are not subject to TFC selection.

## Description

### Technical Field

The present invention relates to a communication terminal apparatus used in a CDMA radio communication system, and a transmission power control method thereof.

### Background Art

In a radio communication system, when the total communication terminal apparatus transmission power exceeds the maximum transmission power, it is necessary to perform control to stop transmission or lower the transmission rate, etc., of one of the channels, so that the total transmission power does not exceed the maximum transmission power. In the W-CDMA 3GPP Release 99 specifications, Transport Format Combination Selection (hereinafter referred to as "TFC Selection") is standardized as the method of achieving this.

With TFC Selection, when a communication terminal apparatus transmits data multiplexed on a plurality of Dedicated Channels (hereinafter abbreviated to "DCHs"), it is determined whether or not the total transmission power exceeds the maximum transmission power for each Transport Format Combination, which is a combination of Transport Formats (hereinafter referred to as "TFs") indicating the amount of data transmitted by each DCH, etc., and a TFC capable of transmission is selected. In the following description, a collection of all TFCs is called a TFCS (Transport Format Combination Set).

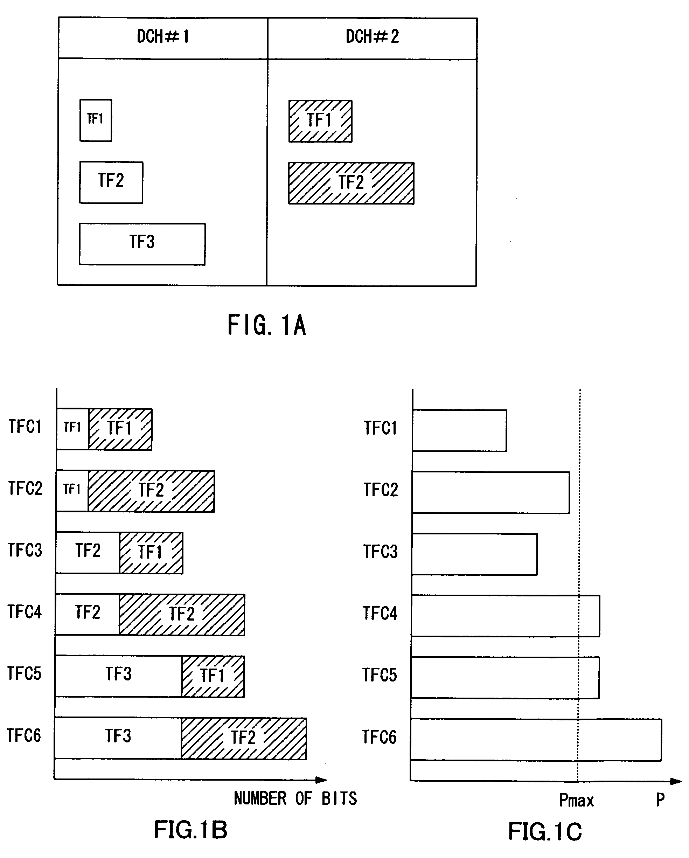

TFC Selection will now be described in concrete terms using FIG.1A through FIG.1C. FIG.1A shows a case in which there are two DCHs, there are three TFs in DCH#1, and there are two TFs in DCH#2. In this case, there are six kinds of TFC - TFC1 through TFC6 - as shown in FIG.1B. In FIG.1A and FIG.1B, the number of bits of each TF is indicated by the length of the horizontal axis.

Here, it is necessary to speed up the transmission rate in proportion as the number of bits that must be sent per unit time increases, and in order to achieve predetermined quality, transmission power must be raised in proportion as the transmission rate increases.

FIG.1C shows the transmission power for each TFC, with transmission power assumed to be in a proportional relationship with the number of bits. In FIG.1C, the dotted line shows maximum transmission power Pmax.

In the case shown in FIG.1C, the communication terminal apparatus determines that the total transmission power in TFC1 through TFC3 in the TFCS is less than maximum transmission power Pmax, and therefore transmission is possible, and determines that the total transmission power in TFC4 through TFC6 in the TFCS exceeds maximum transmission power Pmax and transmission power is insufficient, and therefore transmission is impossible. The communication terminal apparatus then selects one TFC from among TFC1 through TFC3 for which transmission is determined to be possible.

By having a communication terminal apparatus perform the above operation at regular intervals - that is, by determining whether or not the maximum transmission power is exceeded for each TFC in a TFCS - communication can be performed without exceeding the communication terminal apparatus's maximum transmission power.

Here, a communication terminal apparatus may perform reception of an HS-DSCH, which is an outbound packet channel, and transmission of an HS-DPCCH, which is HS-DSCH inbound control information.

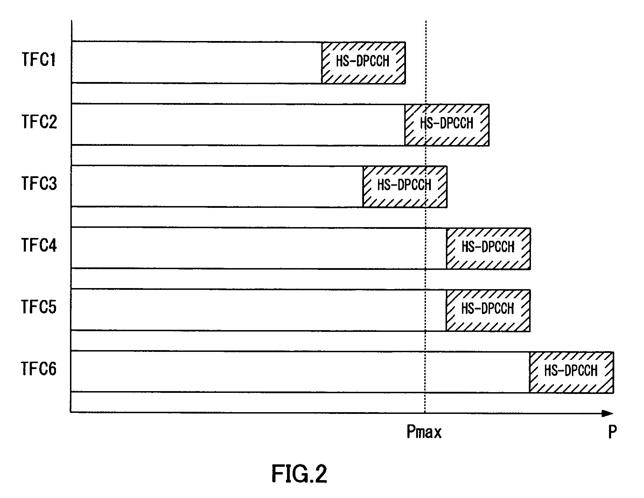

FIG.2 is a drawing showing the transmission power of each TFC when an HS-DPCCH that is a channel not included in the TFCS is transmitted in addition to a DCH. In the case shown in FIG.2, HS-DPCCH transmission power is necessary in addition to the transmission power shown in FIG.1C. As a result, there is only one TFC for which transmission together with an HS-DPCCH is possible without exceeding the maximum transmission power.
Non-patent Document 1: 3GPP TSG R1-030062, "Reference Techniques - TFC selection in UE"

### Disclosure of Invention

### Problems to be solved by the Invention

However, with a conventional communication terminal apparatus, as an HS-DPCCH is not included in the TFCS it is not subject to TFC Selection, and therefore an HS-DPCCH cannot be taken into consideration in TFC Selection, TFC1 through TFC3 are mistakenly determined to be capable of transmission, and there is a danger that TFC2 or TFC3 will be selected and maximum transmission power Pmax will be exceeded.

Thus, with a conventional communication terminal apparatus, adding an inbound channel not subject to TFC Selection (that is, a channel not included in the TFCS) incurs a risk that the total transmission power of all channels will exceed the maximum transmission power. A resultant problem is that interference imposed on other users increases, and adjacent channel interference also increases due to operation in a nonlinear area of the transmit amplifier, affecting not only the system itself but also cells of other frequencies or other systems.

It is therefore an object of the present invention to provide a communication terminal apparatus and transmission power control method that enable control to be performed so that the total transmission power of all channels does not exceed the maximum transmission power when there is an uplink channel that is included in the TFCS and is subject to TFC Selection, and an uplink channel that is not included in the TFCS and is not subject to TFC Selection.

### Means for Solving the Problem

A communication terminal apparatus of the present invention multiplexes and transmits data of a first channel that is subject to TFC Selection and data of a second channel that is not subject to the aforementioned TFC Selection, and has a configuration that includes: a resource allocation section that allocates first channel and second channel resources so that the total transmission power of the first channel and the second channel does not exceed the maximum transmission power at which transmission is possible by the communication terminal apparatus; and a TFC selection section that selects a TFC for which transmission is possible within the first channel resource range allocated by the resource allocation section.

A transmission power control method of a communication terminal apparatus of the present invention is a transmission power control method of a communication terminal apparatus that multiplexes and transmits data of a first channel that is subject to TFC Selection and data of a second channel that is not subject to the aforementioned TFC Selection, and includes: a step of allocating first channel and second channel resources so that the total transmission power of the first channel and the second channel does not exceed the maximum transmission power at which transmission is possible by the communication terminal apparatus; and a step of controlling the transmission power of the first channel and the transmission power of the second channel within the range of resources allocated by the resource allocation section.

### Advantageous Effect of the Invention

According to the present invention, when there is an uplink channel that is included in the TFCS and is subject to TFC Selection, and an uplink channel that is not included in the TFCS and is not subject to TFC Selection, control is performed so that the total transmission power of all channels is not exceeded by allocating the respective channel resources and performing TFC Selection within the range of allocated resources.

### Brief Description of Drawings

FIG.1A is a drawing for explaining TFC Selection;
FIG.1B is a drawing for explaining TFC Selection;
FIG.1C is a drawing for explaining TFC Selection;
FIG.2 is a drawing for explaining problems with a conventional communication terminal apparatus;
FIG.3 is a block diagram showing the configuration of a communication terminal apparatus according to Embodiment 1 of the present invention;
FIG.4 is a flowchart showing the first resource allocation method according to the above embodiment;
FIG.5 is a drawing showing the result of resource allocation by means of the first resource allocation method according to the above embodiment;
FIG.6 is a drawing showing the progression over time of resources allocated by means of the first resource allocation method according to the above embodiment;
FIG.7 is a flowchart showing the second resource allocation method according to the above embodiment;
FIG.8 is a drawing showing the result of resource allocation by means of the second resource allocation method according to the above embodiment;
FIG.9 is a drawing showing the progression over time of resources allocated by means of the second resource allocation method according to the above embodiment;
FIG.10 is a flowchart showing the third resource allocation method according to the above embodiment;
FIG.11 is a drawing showing the result of resource allocation by means of the third resource allocation method according to the above embodiment;
FIG.12 is a drawing showing the progression over time of resources allocated by means of the third resource allocation method according to the above embodiment;
FIG.13 is a block diagram showing the configuration of a communication terminal apparatus according to Embodiment 2 of the present invention:
FIG.14 is a flowchart showing a resource allocation method according to the above embodiment;
FIG.15 is a drawing showing the result of resource allocation by means of the resource allocation method according to the above embodiment;
FIG.16 is a drawing showing the progression over time of resources allocated by means of the resource allocation method according to the above embodiment;
FIG.17 is a block diagram showing the configuration of a communication terminal apparatus according to Embodiment 3 of the present invention:
FIG.18 is a flowchart showing a resource allocation method according to the above embodiment;
FIG.19 is a drawing showing the result of resource allocation by means of the resource allocation method according to the above embodiment;
FIG.20 is a flowchart showing a resource allocation method according to the above embodiment;
FIG.21 is a drawing showing the result of resource allocation by means of the resource allocation method according to the above embodiment; and
FIG. 22 is a flowchart showing an example of a resource allocation method according to another embodiment of the present invention.

### Best Mode for Carrying Out the Invention

With reference now to the accompanying drawings, embodiments of the present invention will be explained in detail below.

### (Embodiment 1)

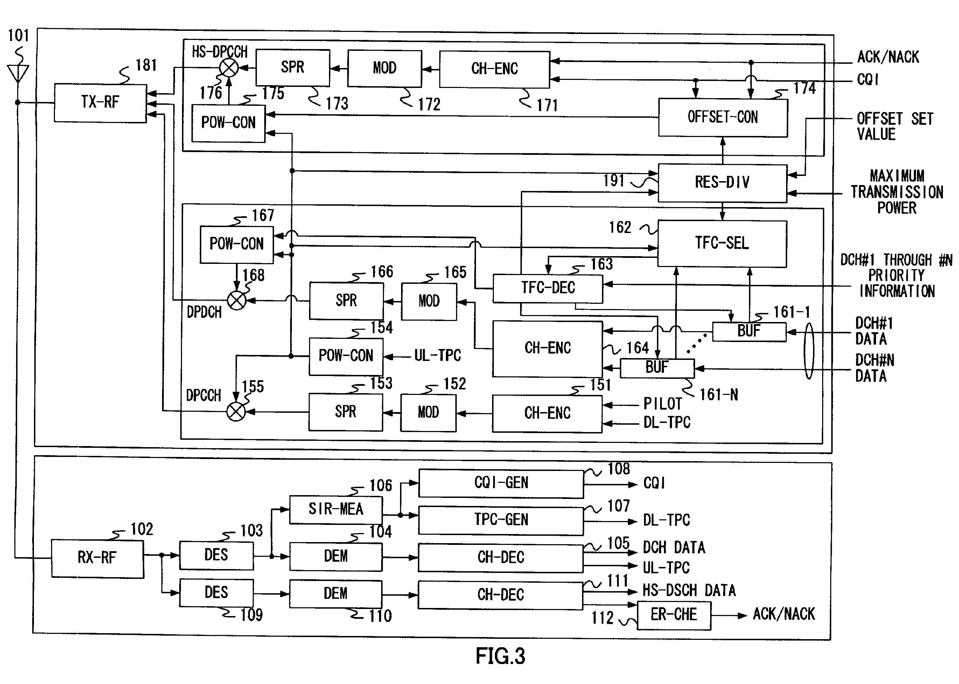

FIG.3 is a block diagram showing the configuration of a communication terminal apparatus according to Embodiment 1 of the present invention.

First, the receiving section of the communication terminal apparatus in FIG.3 will be described.

A receiving radio section (RX-RF) 102 down-converts a signal received by an antenna 101 to a baseband signal, and performs A/D conversion processing on this signal.

A despreading section (DES) 103 performs despreading processing on the output signal from receiving radio section 102 using a DCH despreading code. A demodulation section (DEM) 104 demodulation section 110 performs demodulation processing on the output signal from despreading section 103. A channel decoding section (CH-DEC) 105 performs decoding processing on the output signal from demodulation section 104, and extracts receive DCH data and a UL-TPC command. The UL-TPC command is input to a transmission power control section (POW-CON) 154.

An SIR measuring section (SIR-MEA) 106 measures the desired signal power of the despreading section 103 output signal, calculates interference wave power from the desired signal power variance, and measures the ratio of the desired signal power to the interference wave power (signal to interference ratio, hereinafter referred to as "SIR"). Based on the relative magnitudes of the downlink reception SIR and target SIR, a TPC generation section (TPC-GEN) 107 generates a downlink transmission power control command (hereinafter referred to as "DL-TPC") that orders increasing/decreasing of downlink transmission power. The DL-TPC command is input to a channel encoding section (CH-ENC) 151.

A CQI generation section (CQI-GEN) 108 generates CQI, which is information indicating downlink quality according to the downlink reception SIR. CQI is input to a channel encoding section (CH-ENC) 171.

A despreading section (DES) 109 performs despreading processing on the output signal from receiving radio section 102 using an HS-DSCH despreading code. A demodulation section (DEM) 110 performs demodulation processing on the output signal from despreading section 109. A channel decoding section (CH-DEC) 111 performs decoding and extracts receive HS-DSCH data.

An error detection section (ER-CHE) 112 receives HS-DSCH data output from channel decoding section 111, and outputs an ACK signal to channel encoding section 171 if an error is not detected, or a NACK signal if an error is detected.

Next, the configuration of the transmitting section of the communication terminal apparatus in FIG.3 will be described.

Channel encoding section 151 performs encoding processing on a PILOT and DL-TPC command. A modulation section (MOD) 152 performs modulation processing on the output signal from channel encoding section 151. A spreading section (SPR) 153 performs spreading processing on the output signal from modulation section 152. Based on stored transmission power, transmission power control section 154 increases/decreases transmission power in accordance with a UL-TPC command, and controls an amplification section 155. Based on control by transmission power control section 154, amplification section 155 amplifies the output signal from spreading section 153 and outputs the resulting signal to a transmitting radio section (TX-RF) 181 as a DPCCH.

Each of buffers (BUF) 161-1 through 161-N temporarily stores corresponding DCH#1 through #N data, extracts data corresponding to a TF indicated by a TFC decision section (TFC-DEC) 163 described later herein, and outputs this to a channel encoding section (CH-ENC) 164.

A TFC Selection section (TFC-SEL) 162 performs TFC creation based on the buffer quantities stored in buffers 161-1 through 161-N, performs selection of TFCs that can be used (TFC Selection) based on a first channel resource allocated by a resource allocation section (RES-DIV) 191 described later herein, and outputs the selected TFCs and DPDCH resources to TFC decision section 163.

Based on DCH#1 through #N priority information, TFC decision section 163 decides on one TFC from among the selectable TFCs, indicates a TF to each of buffers 161-1 through 161-N, and outputs information indicating DPDCH resources to a transmission power control section 167.

Channel encoding section 164 performs encoding processing on the output signals from buffers 161-1 through 161-N. A modulation section (MOD) 165 performs modulation processing on the output signal from channel encoding section 164. A spreading section (SPR) 166 performs spreading processing on the output signal from modulation section 165. Transmission power control section (POW-CON) 167 controls an amplification section 168 so that transmission power is produced based on DPDCH resources. Based on control by transmission power control section 167, amplification section 168 amplifies the output signal from spreading section 166 and outputs the resulting signal to transmitting radio section 181 as a DPDCH.

In the communication terminal apparatus, component parts 151 through 168 make up a first transmitting section (for DCH use). In the following description, a channel that belongs to the first transmitting section and is an uplink channel subject to TFC Selection is referred to as a first channel.

Channel encoding section 171 performs encoding processing on ACK/NACK and CQI. A modulation section (MOD) 172 performs modulation processing on the output signal from channel encoding section 171. A spreading section (SPR) 173 performs spreading processing on the output signal from modulation section 172.

When ACK/NACK or CQI is transmitted, an offset control section (OFFSET-CON) 174 sets a resource allocated by resource allocation section 191 described later herein in a transmission power control section 175 as an offset value.

Transmission power control section (POW-CON) 175 increases/decreases transmission power in accordance with a value resulting from multiplying the DPCCH transmission power by the offset, and controls an amplification section 176. Based on control by transmission power control section 175, amplification section 176 amplifies the output signal from spreading section 173 and outputs the resulting signal to transmitting radio section 181 as an HS-DPCCH.

In the communication terminal apparatus, component parts 171 through 176 make up a second transmitting section (for HS-DPCCH use). In the following description, a channel that belongs to the second transmitting section and is an uplink channel not subj ect to TFC Selection is referred to as a second channel.

Transmitting radio section 181 multiplexes the DPCCH, DPDCH, and HS-DPCCH, performs D/A conversion processing and up-conversion, and transmits a radio signal from antenna 101.

Resource allocation section 191 allocates first channel and second channel resources based on the DPCCH transmission power and offset value. The value used as an offset value may be an offset set value input from outside, or may be a TFC-specific offset value determined by TFC decision section 163.

Examples of resource allocation section 191 resource allocation methods will be described in concrete terms below.

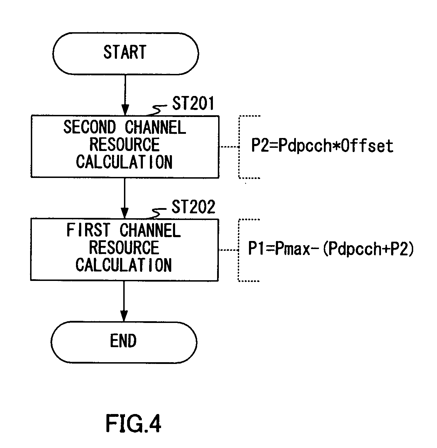

First, a first resource allocation method that gives priority to securing a second channel resource will be described using FIG.4. In this case, resource allocationsection191calculatessecondchannelresource P2 by multiplying DPCCH transmission power Pdpcch by offset value Offset input from outside, and outputs P2 to offset control section 174 (ST201). Resource allocation section 191 then calculates first channel resource P1 by subtracting Pdpcch and P2 from maximum transmission power Pmax, and outputs P1 to TFC Selection section 162 (ST202).

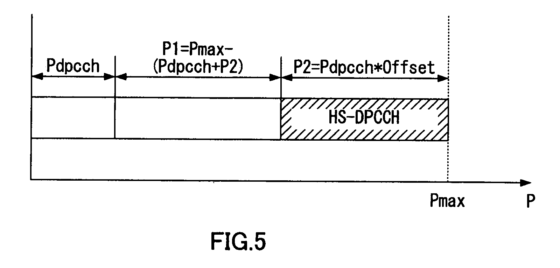

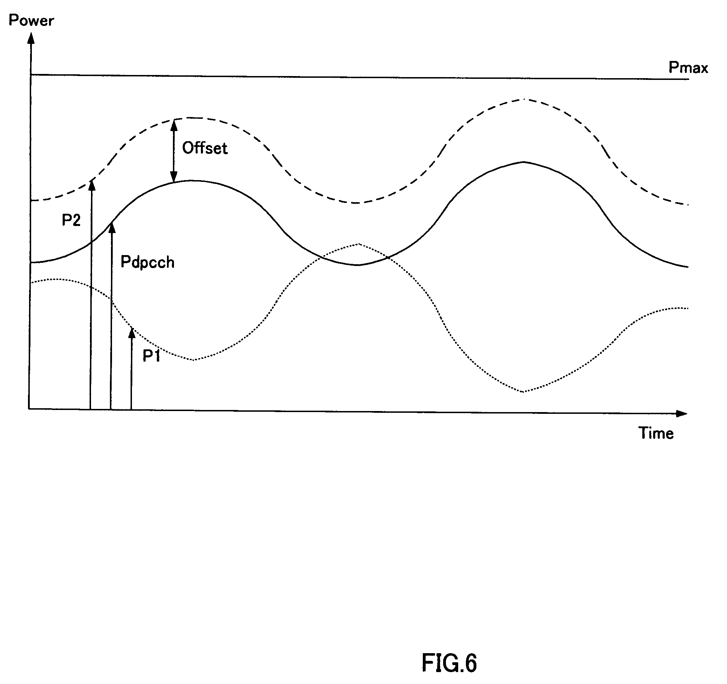

FIG.5 is a drawing showing the result of resource allocation by means of the first method, and FIG.6 is a drawing showing the progression over time of resources allocated by means of the first method. As shown in FIG. 5 and FIG.6, with the first method priority can be given to second channel resource securement, enabling the second channel service provision range (coverage) to be maintained at all times. For the first channel also, an appropriate TFC can be selected so that the maximum transmission power is not exceeded.

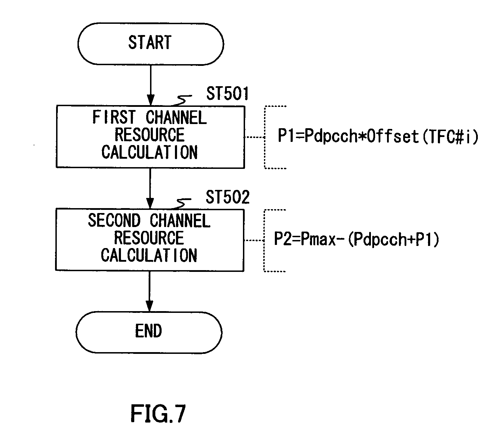

Next, a second resource allocation method that gives priority to securing a first channel resource will be described using FIG.7. In this case, resource allocation section 191 has as input TFC#i determined by TFC decision section 163, calculates first channel resource P1 by multiplying DPCCH transmission power Pdpcch by TFC#i offset value Offset (TFC#i), and outputs P1 to TFC Selection section 162 (ST501). Resource allocation section 191 then calculates second channel resource P2 by subtracting Pdpcch and P1 from maximum transmission power Pmax, and outputs P2 to offset control section 174 (ST502).

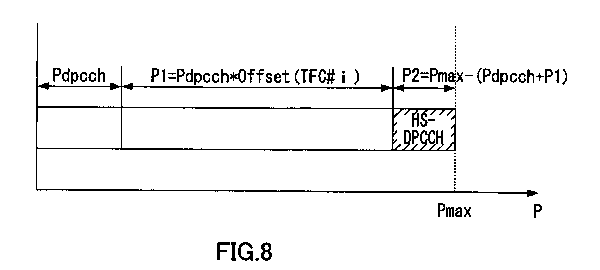

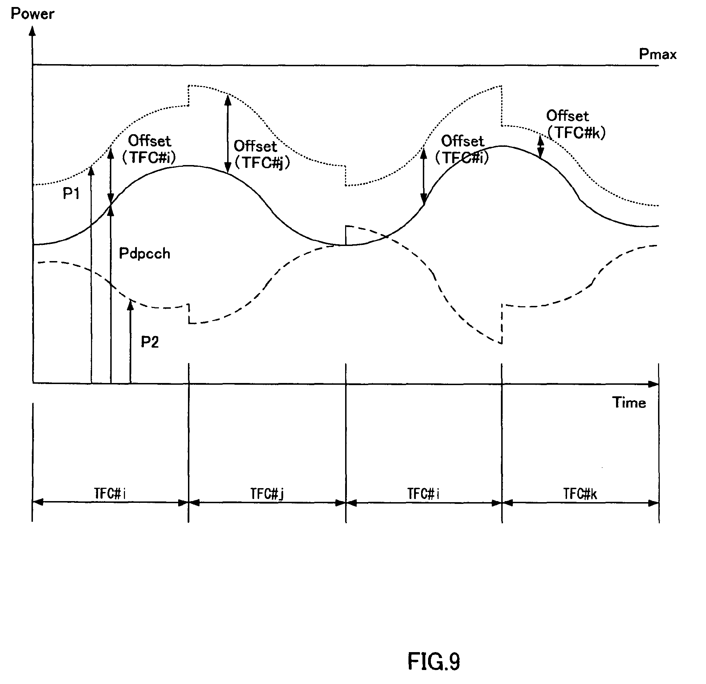

FIG.8 is a drawing showing the result of resource allocation by means of the second method, and FIG.9 is a drawing showing the progression over time of resources allocated by means of the second method. As shown in FIG.8 and FIG.9, with the second method priority can be given to first channel resource securement, enabling the first transmitting section channel service provision range (coverage) to be maintained at all times. Although cases may arise in which sufficient transmission power cannot be secured to obtain predetermined quality in a second transmitting section channel, it is possible to ensure that the maximum transmission power is not exceeded.

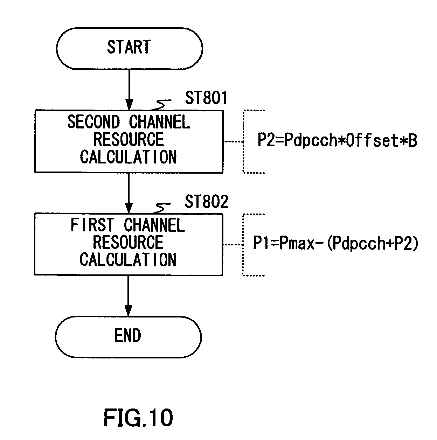

Next, a third resource allocation method that gives priority to securing a second channel resource and corrects the secured second channel resource will be described using FIG.10. In this case, resource allocationsection191calculatessecondchannelresource P2 by multiplying DPCCH transmission power Pdpcch by offset value Offset input from outside and a predetermined coefficient B (0≤B≤1), and outputs P2 to offset control section 174 (ST801). Resource allocation section 191 then calculates first channel resource P1 by subtracting Pdpcch and P2 from maximum transmission power Pmax, and outputs P1 to TFC Selection section 162 (ST802). Coefficient B is a value indicating the ratio between the resource required by the second transmitting section in order to obtain the predetermined quality and the second channel resource that is actually allocated.

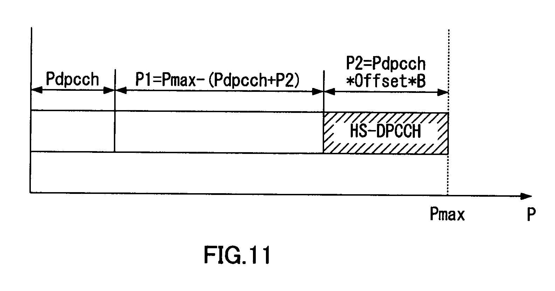

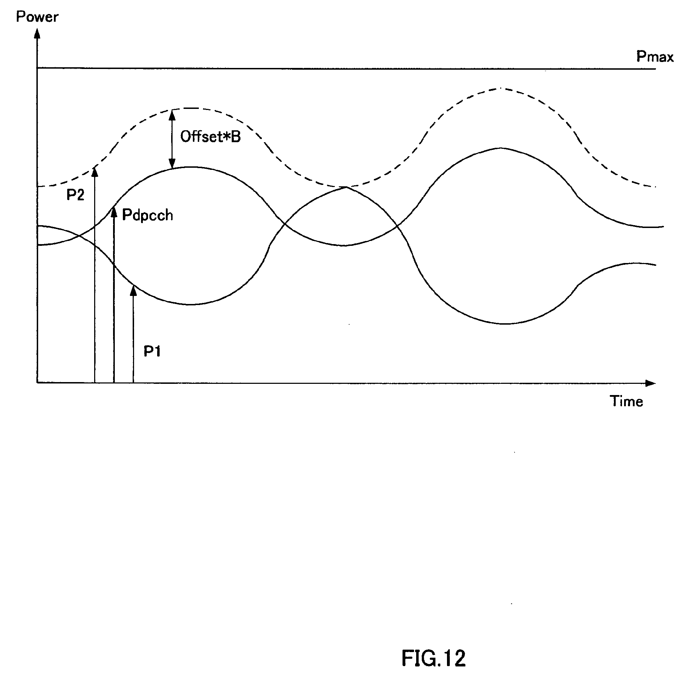

FIG.11 is a drawing showing the result of resource allocation by means of the third method, and FIG.12 is a drawing showing the progression over time of resources allocated by means of the third method. As shown in FIG.11 and FIG.12, with the third method priority is given to second channel resource securement, and balance with a first channel resource is achieved by correcting the secured second channel resource by multiplying it by a coefficient.

Thus, according to this embodiment, when there is an uplink channel that is subject to TFC Selection and an uplink channel that is not subj ect to TFC Selection, control can be performed so that the total transmission power of all channels is not exceeded by allocating the respective channel resources and performing TFC Selection within the range of allocated resources.

In this embodiment, a case has been described in which offset value Offset and coefficient B are fixed, but the present invention is not limited to this case, and offset value Offset and coefficient B may be made variable in accordance with transmitted information (ACK/NACK, CQI, a setting in accordance with the CQI level), the coding method (whether or not repetition is used), transmission type (periodic transmission, triggered transmission), number of base station apparatuses to which a communication terminal apparatus is connected (whether or not soft handover is performed), a network-side directive, and so forth.

### (Embodiment 2)

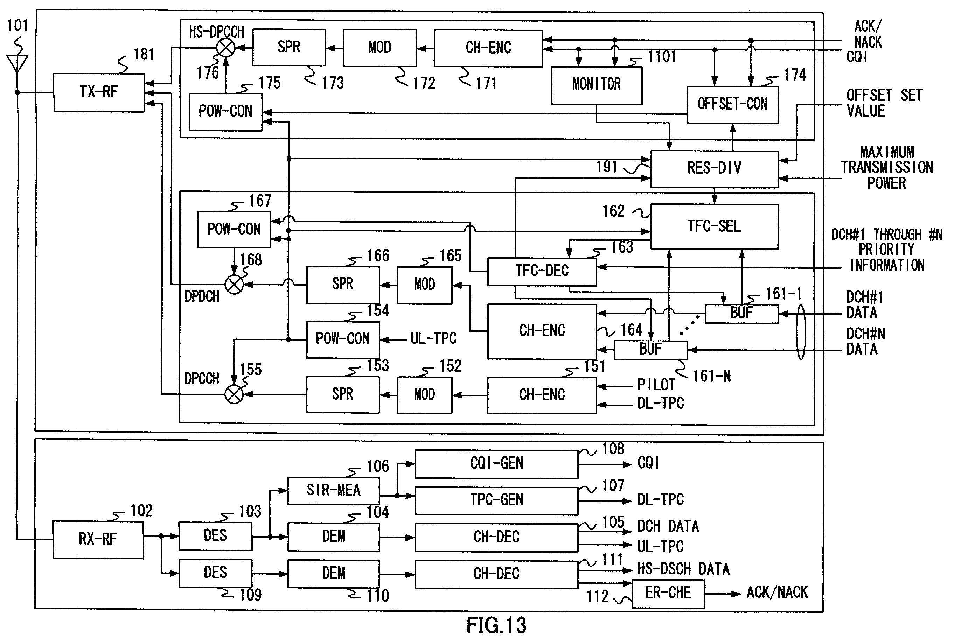

FIG.13 is a block diagram showing the configuration of a communication terminal apparatus according to Embodiment 2 of the present invention. Parts in FIG.13 common to FIG.3 are assigned the same codes as in FIG.3, and detailed descriptions thereof are omitted.

The communication terminal apparatus shown in FIG.13 has a configuration in which a transmission status monitor section (MONITOR) 1101 has been added to the configuration in FIG.3.

Transmission status monitor section 1101 monitors the presence or absence of information (HS-DPCCH ACK/NACK or CQI) transmitted from a second channel, and outputs the amount of information transmitted from a second channel in the past to resource allocation section 191. Specifically, transmission status monitor section 1101 calculates a transmission status coefficient Atx, which is the ratio of time Tx in which information is transmitted from a second channel to a predetermined period Tmonitor, and outputs Atx to resource allocation section 191.

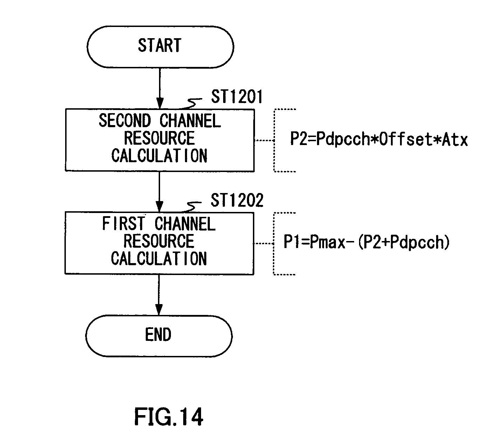

As shown in FIG.14, resource allocation section 191 calculates second channel resource P2 by multiplying DPCCH transmission power Pdpcch by offset value Offset input from outside and transmission status coefficient Atx, and outputs P2 to offset control section 174 (ST1201) . Resource allocation section 191 then calculates first channel resource P1 by subtracting Pdpcch and P2 from maximum transmission power Pmax, and outputs P1 to TFC Selection section 162 (ST1202).

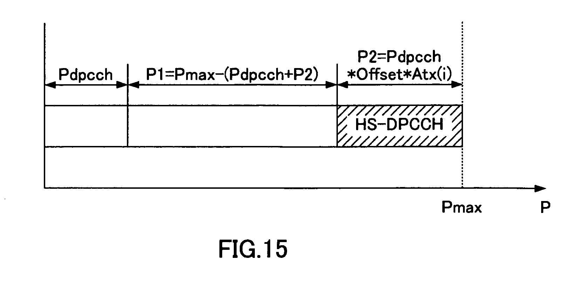

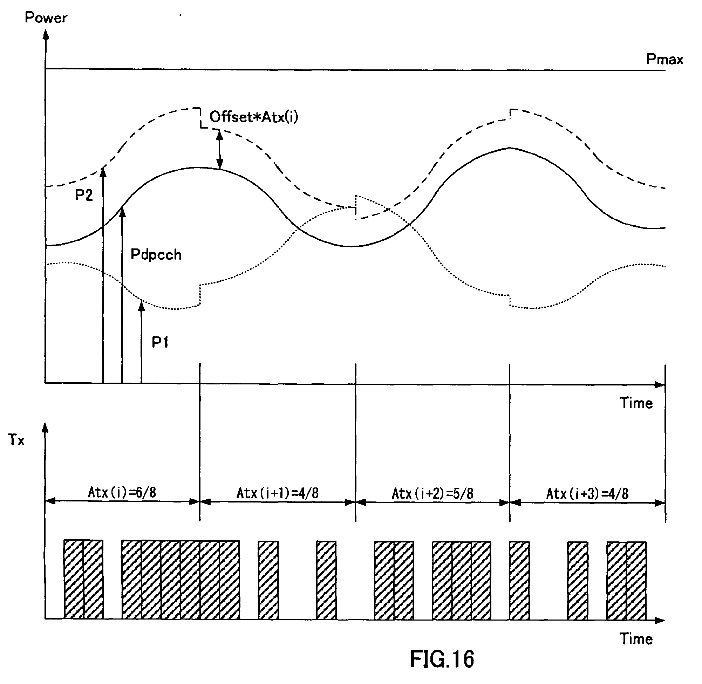

FIG. 15 is a drawing showing the result of resource allocation according to this embodiment, and FIG.16 is a drawing showing the progression over time of resources allocated according to this embodiment.

Thus, according to this embodiment, priority can be given to second channel resource securement, and excessive securing of resources in a second channel in which data is transmitted in burst mode can be prevented by monitoring the transmission status of information transmitted from a second channel. As a result, more first channel resources can be secured than with the above-described first method of Embodiment 1 without exceeding the maximum transmission power.

### (Embodiment 3)

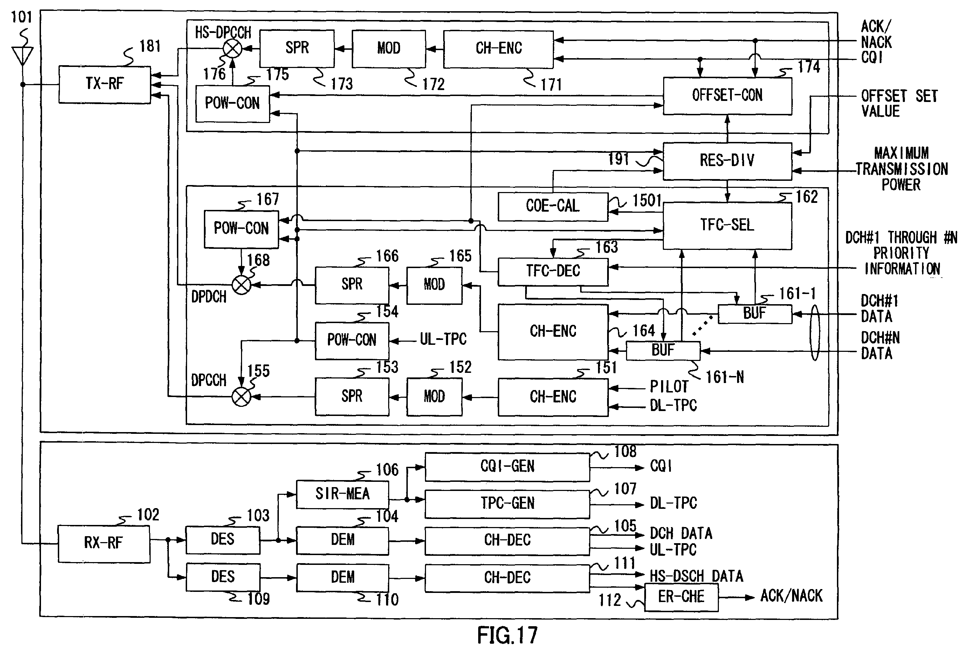

FIG.17 is a block diagram showing the configuration of a communication terminal apparatus according to Embodiment 3 of the present invention. Parts in FIG.17 common to FIG.3 are assigned the same codes as in FIG.3, and detailed descriptions thereof are omitted.

The communication terminal apparatus shown in FIG.17 has a configuration in which a coefficient calculation section (COE-CAL) 1501 has been added to the configuration in FIG.3.

Coefficient calculation section 1501 has as input TFCs created by TFC Selection section 162, sets a coefficient for each TFC, and outputs the set coefficients to resource allocation section 191.

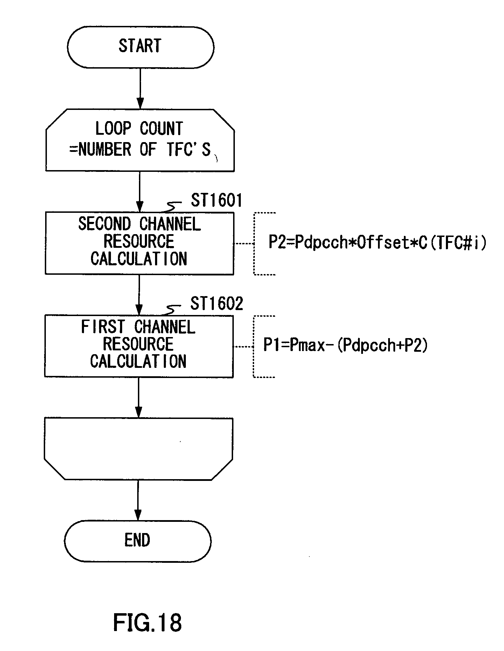

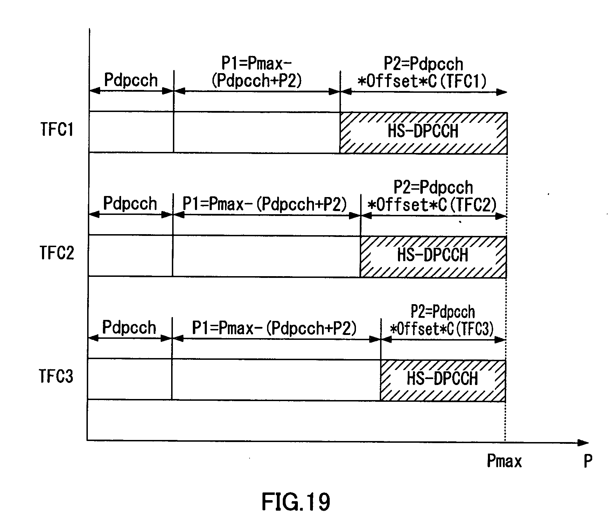

Resource allocation section 191 calculates first transmitting section and second channel resources on a TFC-by-TFC basis based on an offset value and the TFC coefficients. Specifically, as shown in FIG.18, for each TFC, resource allocation section 191 calculates second channel resource P2 by multiplying DPCCH transmission power Pdpcch by offset value Offset input from outside and the respective TFC coefficient C (TFC#i), and outputs P2 to offset control section 174 (ST1601). Resource allocation section 191 then calculates first channel resource P1 by subtracting Pdpcch and P2 from maximum transmission power Pmax, and outputs P1 to TFC Selection section 162 (ST1602). By performing steps ST1601 and ST1602 for all TFCs, first transmitting section DPDCH and second channel resources can be allocated for each TFC as shown in FIG.19.

TFC Selection section 162 performs TFC Selection and outputs the selected TFC and DPDCH resources to TFC decision section 163.

Based on DCH#1 through #N priority information, TFC decision section 163 decides on one TFC from among the selectable TFCs, and outputs information indicating the determined TFC to offset control section 174.

Offset control section 174 sets an offset equivalent to the second channel resource corresponding to the input TFC in transmission power control section 175.

Thus, according to this embodiment, more precise resource allocation can be performed than in above-described Embodiment 1 by allocating first transmitting section DPDCH and second channel resources on a TFC-by-TFC basis.

Here, there are cases in which whether priority is to be given to first transmitting section or second transmitting section resource securement differs according to the TFC, such as when it is necessary for a predetermined TFC quality to be secured in system operation.

In this embodiment, resource allocation section 191 can determine whether priority is to be given to first transmitting section or second transmitting section resource securement according to the TFC, and switch the resource allocation method as appropriate.

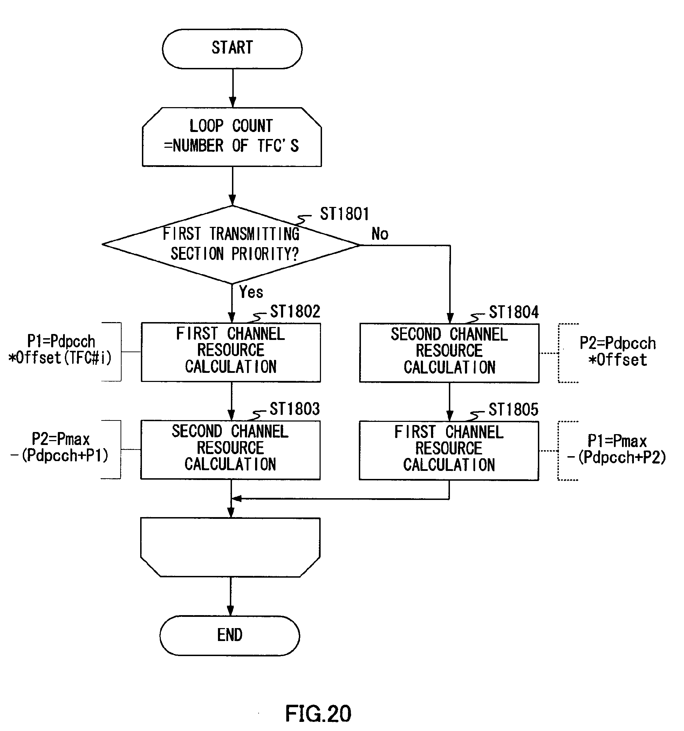

In FIG.20, resource allocation section 191 first determines whether priority is to be given to first transmitting section or second transmitting section resource securement on a TFC-by-TFC basis (ST1801).

Then, if priority is to be given to first channel resource securement, resource allocation section 191 receives as input TFC#i determined by TFC decision section 163, calculates first channel resource P1 by multiplying DPCCH transmission power Pdpcch by TFC#i offset value Offset (TFC#i), and outputs P1 to TFC Selection section 162 (ST1802). Resource allocation section 191 then calculates second channel resource P2 by subtracting Pdpcch and P1 from maximum transmission power Pmax, and outputs P2 to offset control section 174 (ST1803).

On the other hand, if priority is to be given to second channel resource securement, resource allocation section 191 calculates second channel resource P2 by multiplying DPCCH transmission power Pdpcch by offset value Offset input from outside, and outputs P2 to offset control section 174 (ST1804). Resource allocation section 191 then calculates first channel resource P1 by subtracting Pdpcch and P2 from maximum transmission power Pmax, and outputs P1 to TFC Selection section 162 (ST1805).

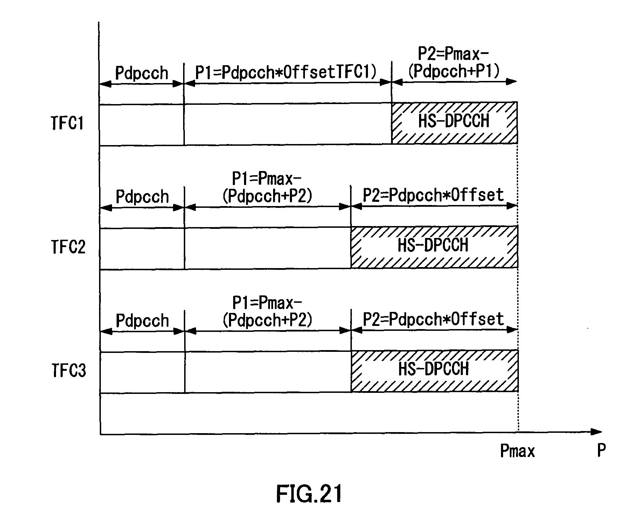

By performing steps ST1801 through ST1805 for all TFCs, allocation with priority given to either first transmitting section DPDCH or second transmitting section resources can be performed selectively for each TFC as shown in FIG.21. FIG.21 shows a case in which TFC1 is a TFC for which priority is given to first channel resource securement, and TFC2 and TFC3 are TFCs for which priority is given to second channel resource securement.

### (Other Embodiments)

In the above-described embodiments, an HS-DPCCH has been taken as an example of an inbound channel that is not subject to TFC Selection, but the present invention is not limited to this, and can also be applied to a case where another inbound channel that is not subject to TFC Selection or channel included in a different TFCS from a DCH is added. Examples of inbound channels that are not subject to TFC Selection include an E-DPDCH, which is a channel that transmits E-DCH (Enhancement-Dedicated Channel) ; an E-DPCCH, which is a channel that transmits E-DPDCH related data format information and control information (such as hybrid ARQ related information, for example); and a channel that transmits information for requesting E-DPDCH transmission permission (for example, the amount of data to be transmitted, usable transmission power margin, and maximum transmission power).

Here, when there are a plurality of inbound channels that are not subject to TFC Selection, it is also possible for resource allocation section 191 to first secure resources for the predetermined channel of the second transmitting section, and perform allocation of the remaining resources for the other channels. As an example, if there is an E-DCH, when transmitting ACK in the TCP (Transmission Control Protocol), or data that is small in quantity and for which a short delay time is required, such as game data, it might be that the minimum necessary resources are first secured for these data and allocation of the remaining resources is performed for the other channels, or the minimum necessary resources are first secured for a channel on which transmission is performed by means of Autonomous Transmission, which allows a communication terminal apparatus to transmit at any time without obtaining transmission permission from a base station, and allocation of the remaining resources is performed for the other channels.

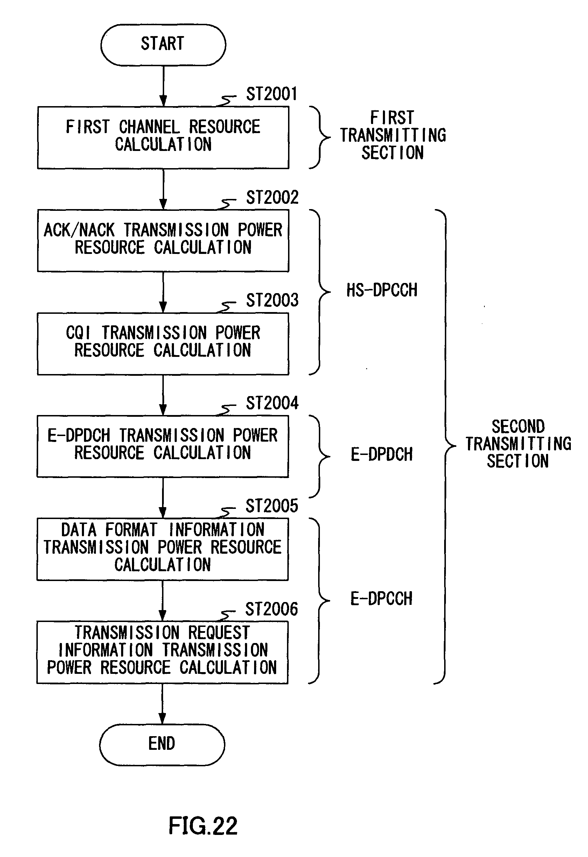

Also, when there are a plurality of inbound channels that are not subject to TFC Selection, resource allocation section 191 can decide the order of resource allocation taking account of priority according to the kind of channel or information. For example, a high priority is given to information corresponding to data that has already been received, such as ACK/NACK, since if this is not transmitted it will be determined that the base station apparatus has failed to receive, unnecessary retransmission will be performed, and efficient radio channel utilization will not be possible. On the other hand, information for future scheduling, such as CQI or a transmission request, is given a lower priority than other information on the same channel. In FIG.22, resource allocation section 191 first performs first channel resource calculation (ST2001), then performs high-priority ACK/NACK resource calculation (ST2002), and thereafter calculates CQI, E-DPDCH, data format information, and transmission request information resources in that order (ST2003 through ST2006).

In the present invention, the resource allocation order need not be fixed, but can be changed adaptively. This makes it possible to avoid a situation in which certain information cannot be transmitted because resources are always inadequate. For example, if ACK is not always given higher priority than CQI, but instead CQI is given priority for resource allocation periodically, it is possible to avoid a situation in which scheduling is not performed because CQI is not received by a base station apparatus. Also, if resources are not always divided between CQI and E-DPDCH transmission requests, but instead one performs transmission using the other's resources on a time division basis in accordance with a predetermined ratio (a set value from the network, the past resource insufficiency situation, or the like), it is possible to avoid a situation in which both fail to achieve predetermined quality every time transmission is performed.

Also, in the present invention, resource allocation section 191 can determine whether priority is to be given to first transmitting section or second transmitting section resource securement according to the kind of inbound channel that is not subject to TFC Selection, information, or the like. For example, if it is necessary to transmit from the first transmitting section information on the results of measurement by a communication terminal apparatus to be used for system operation, or to transmit from the second transmitting section information to be used for future scheduling in a base station apparatus, such as CQI or an E-DPDCH transmission request, giving priority to the first transmitting section makes it possible to avoid a situation in which the entire system ceases to be viable. Specifically, if transmission from the first transmitting section is not given priority when it is necessary for a communication terminal apparatus to perform handover, it is possible that the network side will be unable to determine whether or not handover is to be performed and handover control will not be executed, resulting in a breakdown of communications. However, if transmission from the first transmitting section is given priority, the network side can receive information on the results of measurement by a communication terminal apparatus, handover control can be executed, and a breakdown of communications can be prevented.

Also, when there is an E-DCH in above-described Embodiment 2, instead of monitoring the transmission ON/OFF status with transmission status monitor section 1101, control may be performed by monitoring the actual transmission rate, the transmission rate requested from the base station apparatus, the maximum transmission rate permitted by the network side (base station apparatus or other higher-level station apparatus), or the like.

This application is based on Japanese Patent Application No.2003-292670 filed on August 12, 2003, the entire content of which is expressly incorporated by reference herein.

### Industrial Applicability

The present invention is suitable for use in a communication terminal apparatus that is used in a CDMA radio communication system and performs TFC Selection.

## Claims

1. A communication terminal apparatus that multiplexes data of a first channel that is subject to transport format combination selection and data of a second channel that is not subject to said transport format combination selection, said communication terminal apparatus comprising:
a resource allocation section that allocates a resource of said first channel and a resource of said second channel so that total transmission power of said first channel and said second channel does not exceed maximum transmission power transmissible by said communication terminal apparatus; and
a TFC selection section that selects a transport format combination transmissible within a range of a resource of said first channel allocated by said resource allocation section.

2. The communication terminal apparatus according to claim 1, wherein said resource allocation section secures preferentially one or other of a resource of said first channel or a resource of said second channel, and allocates a resource of another channel.

3. The communication terminal apparatus according to claim 1, further comprising a transmission status monitor section that monitors presence or absence of information transmitted from said second channel, and outputs to said resource allocation section an information amount of information transmitted from said second channel in the past;
wherein said resource allocation section allocates a resource of said second channel based on said information amount.

4. The communication terminal apparatus according to claim 3, wherein:
said transmission status monitor section calculates a transmission status coefficient that is a ratio of time in which information is transmitted from said second channel with respect to a predetermined period, and outputs that transmission status coefficient to said resource allocation section; and
said resource allocation section calculates a resource of said second channel by multiplying transmission power of a dedicated control channel by a predetermined offset value and said transmission status coefficient.

5. The communication terminal apparatus according to claim 1, wherein said resource allocation section allocates resources of said first channel and said second channel for each transport format combination.

6. The communication terminal apparatus according to claim 1, wherein, when there are a plurality of said second channels, said resource allocation section first secures a resource for a predetermined channel of said second channels, and allocates a remaining resource to a channel other than said predetermined channel.

7. The communication terminal apparatus according to claim 2, wherein said resource allocation section determines which of a resource of said first channel or a resource of said second channel is to be allocated preferentially according to a kind of information transmitted from said second channel.

8. The communication terminal apparatus according to claim 7, wherein, when information transmitted from said second channel is information used in scheduling, said resource allocation section preferentially secures a resource of said first channel.

9. A transmission power control method of a communication terminal apparatus that multiplexes data of a first channel that is subject to transport format combination selection and data of a second channel that is not subject to said transport format combination selection, said transmission power control method comprising:
a step of allocating a resource of said first channel and a resource of said second channel so that total transmission power of said first channel and said second channel does not exceed maximum transmission power transmissible by said communication terminal apparatus; and
a step of controlling transmission power of said first channel and transmission power of said second channel within a range of resources allocated by said resource allocation section.
